Europäisches Patentamt

European Patent Office

Office européen des brevets

(19)

(11) Veröffentlichungsnummer : **0 066 742**
**B1**

(12) **EUROPÄISCHE PATENTSCHRIFT**

(45) Veröffentlichungstag der Patentschrift :
26.03.86

(51) Int. Cl.⁴ : **F 16 L 33/22**

(21) Anmeldenummer : **82104341.1**

(22) Anmeldetag : **18.05.82**

(54) **Schlauchkupplung.**

(30) Priorität : **06.06.81 DE 3122709**

(43) Veröffentlichungstag der Anmeldung :
**15.12.82 Patentblatt 82/50**

(45) Bekanntmachung des Hinweises auf die Patenterteilung : **26.03.86 Patentblatt 86/13**

(84) Benannte Vertragsstaaten :
**FR GB IT NL SE**

(56) Entgegenhaltungen :
**AU-A-    15 794**
**AU-A-    41 128**
**DE-A- 2 851 965**
**GB-A-    196 845**
**US-A- 1 980 389**
**US-A- 2 294 960**

(73) Patentinhaber : **Rasmussen GmbH**
**Edisonstrasse 4**
**D-6457 Maintal 3 (DE)**

(72) Erfinder : **Sauer, Heinz**
**Mozartstrasse 3**
**D-6451 Ronneburg (DE)**

(74) Vertreter : **Knoblauch, Ulrich, Dr.-Ing.**
**Kühhornshofweg 10**
**D-6000 Frankfurt am Main 1 (DE)**

Jouve, 18, rue St-Denis, 75001 Paris, France

**Beschreibung**

Die Erfindung bezieht sich auf eine Schlauchkupplung für einen Schlauch aus thermoplastischem Material, mit einem Anschlußstutzen, auf den der Schlauch aufgeschoben wird, und mit einer den Schlauch umgebenden Klemme zum Festklemmen des auf den Anschlußstutzen aufgeschobenen Schlauches auf dem Anschlußstutzen, wobei der Anschlußstutzen auf seiner Außenseite ringförmig umlaufende Halterippen aufweist, die jeweils eine radiale und eine geneigte Flanke aufweisen, und wobei die Steigungen der geneigten Flanken wenigstens zweier Halterippen einander entgegengesetzt sind.

Bei einer bekannten Schlauchkupplung dieser Art (DE-A-2 851 965) kann sich das Schlauchmaterial im Laufe der Zeit unter dem Druck der Klemme so weit bleibend verformen, daß der Einspanndruck abnimmt und sich bei einer Handhabung des Schlauches der Schlauch auf dem Anschlußstutzen verdreht. Desgleichen kann sich der Schlauch durch ein Nachspannen der Klemme verdrehen. Da sich der Schlauch unter dem Einspanndruck der aus fertigungstechnischen Gründen in der Regel nicht genau drehsymmetrischen Form des Anschlußstutzens bereits angepaßt hatte, führt eine nachträgliche Schlauchverdrehung zu einer ungleichmäßigen Verteilung des Schlauchmaterials über den Stutzenumfang und damit zu einer entsprechend ungleichmäßigen Einspanndruckverteilung in Umfangsrichtung. Die Folge kann eine Leckage bei hohem Fluiddruck im Schlauch bzw. Stutzen sein.

Bei der aus der US-A-1 980 389 bekannten Schlauchkupplung sind auf einem Umkreis eines Anschlußstutzens liegende Rippen ausgebildet, die an ihrem dem Aufschubende des Stutzens abgekehrten Ende durch einen Ringflansch verbunden sind und in axiale Schlitze im Aufschubende des Schlauches eingreifen. Diese Rippen bewirken keine Axialsicherung des Schlauches, die durch sie bewirkte Verdrehsicherung des Schlauches ist gering, und die Ausbildung von Schlitzen im Schlauch ist aufwendig.

Der Erfindung liegt die Aufgabe zugrunde, eine Schlauchkupplung der gattungsgemäßen Art anzugeben, die eine höhere Sicherheit gegen ein Verdrehen und Abziehen des Schlauches und damit eine noch höhere Dichtwirkung sicherstellt.

Erfindungsgemäß ist diese Aufgabe dadurch gelöst, daß der Anschlußstutzen über seinen Umfang verteilt angeordnete freistehende Zähne aufweist, die radial vorspringen und sich in das Schlauchmaterial auf der Innenseite des Schlauches eindrücken, daß die Zähne eine zum Aufschubende des Anschlußstutzens hin abfallende und eine dem Aufschubende des Anschlußstutzens abgekehrte Flanke mit einer eine Axialsicherung des Schlauches bewirkenden Flankensteilheit aufweisen, daß die Form der Zähne im Querschnitt etwa dreieckförmig ist und daß die Schneide der Zähne radial zu äußerst liegt.

Die Zähne stellen nicht nur sicher, daß sich der Schlauch nach dem Spannen nicht mehr verdrehen läßt, sondern tragen zusätzlich auch dazu bei, daß sich der Schlauch nicht vom Anschlußstutzen abziehen läßt.

Sodann kann der Schlauch auf den Anschlußstutzen aufgeschrumpft sein. Auf diese Weise dringt das Schlauchmaterial tiefer in die Zwischenräume der Zähne und in die Nuten zwischen den Halterippen ein, wobei es sich großflächiger an die dem Aufschubende des Anschlußstutzens abgekehrten Flanken der Zähne und Halterippen anlegt und auf diese Weise nicht nur für eine bessere Dreh- und Axialsicherung, sondern auch für eine höhere Dichtwirkung sorgt. Darüber hinaus paßt sich der Schlauch bereits bei der Anbringung am Stutzen einer eventuellen Unsymmetrie des Stutzens von vornherein an. Desgleichen werden unsymmetrische Materialverteilungen im Schlauch von vornherein beim Festziehen der Klemme ausgeglichen, so daß sich eine gleichmäßige Einspanndruckverteilung in Umfangsrichtung ergibt.

Ferner kann die Klemme auf der Innenseite mit ringförmig umlaufenden Halterippen versehen sein. Diese verbessern ihrerseits die Axialsicherung des Schlauches auf dem Anschlußstutzen, ohne die Gefahr einer Verdrehung des Schlauches beim Spannen zu erhöhen.

Vorzugsweise ist dafür gesorgt, daß die Klemme eine Überwurfmutter ist und daß ihr Innendurchmesser und der Außendurchmesser des Anschlußstutzens zum Aufschubende des Stutzens hin in gleichem Maße abnehmen. Hierbei kann das Festziehen der Klemme durch einfaches Verdrehen der Überwurfmutter erfolgen, wobei diese ebenfalls beim Spannen das Schlauchmaterial fester in die Nuten zwischen den Halterippen und gleichzeitig fester gegen die dem Aufschubende zugekehrten Flanken der Halterippen in Axialrichtung drückt.

Die Halterippen der Klemme können achsparallele und radiale Flanken aufweisen, wobei die radialen Flanken vom Aufschubende des Stutzens abgekehrt sein können. Hierbei übt die Klemme eine hohe, in Aufschubrichtung des Schlauches wirkende Kraftkomponente auf den Schlauch aus, so daß das Schlauchmaterial sehr fest gegen die dem Aufschubende des Anschlußstutzens zugekehrten Flanken der Halterippe des Anschlußstutzens gedrückt wird.

Die dem Aufschubende des Anschlußstutzens abgekehrten Zahnflanken können radial verlaufen. Auf diese Weise sorgen die Zähne für eine besonders hohe Haltekraft in Axialrichtung des Schlauches.

Sodann kann die Klemme einen über das Aufschubende des Anschlußstutzens vorstehenden Ringabschnitt aufweisen. Dieser sorgt für eine radiale Abstützung des Schlauches und verhindert auf diese Weise bei einer Biegebeanspruchung des aus der Schlauchkupplung herausragenden Schlauchabschnitts, daß der eingeklemmte Schlauchabschnitt aus den Nuten zwischen den Halterippen ausgehoben und bei hohem Fluiddruck aus der Kupplung herausgerissen wird. Ferner verhindert dieser Ringabschnitt ein Abbrechen des Stutzens im aufschubseitigen Endbereich.

Nachstehend wird die Erfindung anhand der Zeichnung eines bevorzugten Ausführungsbeispiels näher beschrieben. Es zeigen :

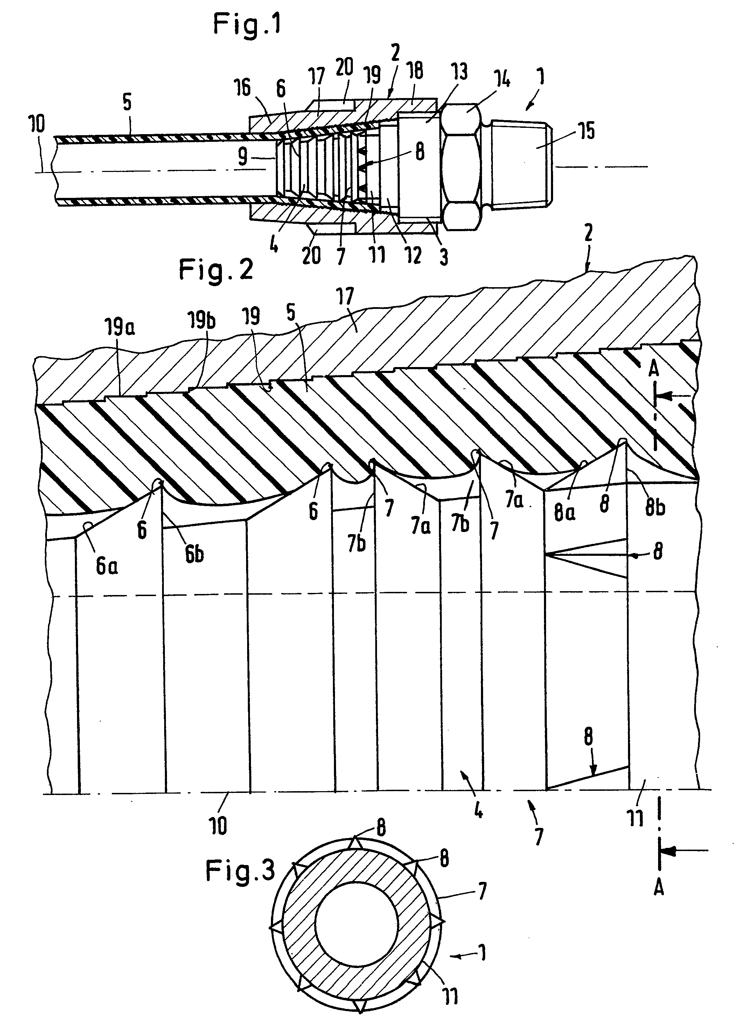

Figur 1 eine Seitenansicht einer erfindungsgemäßen Schlauchkupplung, teilweise im Axialschnitt,

Figur 2 einen Ausschnitt der Fig. 1 in vergrößertem Maßstab und

Figur 3 den Schnitt A-A des Anschlußstutzens.

Die dargestellte Schlauchkupplung besteht aus einem rohrartigen Anschlußstutzen 1 und einer Klemme in Form einer Überwurfmutter 2, die mittels eines zylindrischen Gewindes 3 verschraubbar sind und einen auf einem außen konischen Abschnitt 4 des Anschlußstutzens 1 geschobenen Schlauch 5 aus thermoplastischem Material, z. B. Polyamid, Polypropylen, Polyäthylen und Polyvinylchlorid, zwischen sich festklemmen.

Der konische Abschnitt 4 des Anschlußstutzens 1 ist mit einer ersten Gruppe aus vier außen umlaufenden Halterippen 6 und einer zweiten Gruppe aus zwei außen ringförmig umlaufenden Halterippen 7 sowie Zähnen 8 versehen. Die Halterippen 6 haben geneigte, konische Flanken 6a, die dem Aufschubende 9 des Anschlußstutzens 1 zugekehrt sind und einen Winkel von etwa 30° mit der Längsachse 10 des Anschlußstutzens 1 einschließen, sowie radiale Flanken 6b. Die Halterippen 7 haben ebenfalls geneigte konische Flanken 7a, die jedoch dem Aufschubende 9 abgekehrt sind und ebenfalls einen Winkel von etwa 30° mit der Längsachse 10 einschließen, sowie radiale Flanken 7b. Die Halterippen 7 liegen auf einem größeren Umfang des Abschnitts 4 als die Halterippen 6. Die Abstände der Halterippen 6 sind etwa gleich der Breite bzw. gleich der halben Teilung der Halterippen 6. Die Halterippen 7 sind schmaler als die bzw. haben eine Breite von etwa 75 % der Breite der Halterippen 6 und eine kleinere Teilung als diese, nämlich etwa 63 % der Teilung der Halterippen 6. Auch die Zähne 8 haben eine dem Aufschubende 9 zugekehrte geneigte Flanke 8a und eine radiale Flanke 8b, jedoch einen dreieckförmigen Axial- und Radial-Querschnitt. Sie liegen in gleichmäßigen Abständen auf dem größten Umfang des konischen Abschnitts 4 und grenzen unmittelbar an die eine Halterippe 7. Die radiale Höhe der Halterippen 6, 7 und der Zähne 8 ist gleich etwa der halben Breite der Halterippen 6.

Die konische Fläche des Abschnitts 4 schließt mit der Längsachse 10 einen Winkel von etwa 5° ein. Der an dem konischen Abschnitt 4 angrenzende Abschnitt 11 des Anschlußstutzens 1 ist kreiszylindrisch. An diesen Abschnitt 11 schließt sich ein weiterer kreiszylindrischer Abschnitt 12 an, dessen Außendurchmesser größer als der des Abschnitts 11 ist und der als Anschlag für den Schlauch 5 beim Aufschieben auf den Anschlußstutzen 1 dient. Der sich daran anschließende kreiszylindrische Außengewindeabschnitt 13 des Anschlußstutzens 1 mit dem Gewinde 3 hat einen noch größeren Außendurchmesser als der Abschnitt 12. An den Abschnitt 13 schließt sich ein Sechskant-Abschnitt 14 und an diesen ein weiterer, jedoch zylindrischer Gewindeabschnitt 15 an.

Die Klemme hat einen innen kreiszylindrischen Abschnitt 16, einen innen konischen Abschnitt 17 und einen Innengewindeabschnitt 18, der mit dem Außengewindeabschnitt 13 verschraubt ist. Der innen konische Abschnitt 17 ist ebenfalls mit ringförmig umlaufenden Halterippen 19 versehen, die jeweils eine zur Längsachse 10 parallele bzw. koaxiale Flanke 19a und eine vom Aufschubende 9 des Anschlußstutzens 1 abgekehrte radiale Flanke 19b aufweisen. Diese Halterippen 19 haben keinen axialen Abstand, eine geringere, etwa halb so große Breite wie die Halterippen 6 und eine wesentlich geringere radiale Höhe als die Halterippen 6, nur etwa 9 % der Höhe der Halterippen 6. Der Neigungswinkel des Innenkonus der Klemme 2 bzw. des Abschnitts 17 ist etwa gleich dem des Abschnitts 4.

Der Schlauch 5 wird unmittelbar vor dem Aufschieben auf den Abschnitt 4 des Anschlußstutzens 1 so weit erwärmt, daß er leicht plastisch wird, und dann im erwärmten und plastischen Zustand auf den Abschnitt 4 geschoben. Das Erwärmen erleichtert nicht nur das Aufschieben des Schlauches 5, sondern hat auch den Vorteil, daß sich das plastische Material an den dem Aufschubende 9 zugekehrten Flanken 6a und 7b der Halterippen 6 und 7 aufstaut, insbesondere an den radialen Flanken 7b der Halterippen 7, und verhältnismäßig tief in die Nuten zwischen den Halterippen 6, 7 eindringt. Dies führt zu einer großflächigen Anlage des Schlauchmaterials an den Halterippen 6, 7 und einer entsprechend hohen Dichtwirkung, die insbesondere im Bereich der radialen Flanken 7b, die noch durch die in Richtung der Längsachse 10 (nach rechts) auf die Flanken 6a, 7b wirkende Druckkomponente des durch den Schlauch 5 und den Anschlußstutzen 1 strömenden Fluids unterstützt wird. Sodann dringen die Zähne 8 tief in das Schlauchmaterial, so daß sie ein Verdrehen des Schlauches 5 beim Festziehen der anschließend über das auf den Anschlußstutzen 1 aufgeschrumpfte Schlauchende geschobenen Überwurfmutter 2 verhindern. Um das Festziehen der Überwurfmutter 2 zu erleichtern, weist sie gleichmäßig über ihren Umfang verteilt angeordnete Axialnuten 20 auf, in die ein mit entsprechenden Vorsprüngen versehener Mutternschlüssel eingreifen kann. Die Dichtwirkung wird ferner noch durch die konischen Formen von Anschlußstutzen 1 und Überwurfmutter 2 sowie deren Halterippen 19 gesteigert, die für ein weiteres Eindringen des Schlauchmaterials in die Nuten zwischen den Halterippen 6, 7 und eine Steigerung des Drucks des Schlauchmaterials gegen die Flanken 6a, 7b sorgen.

Das Aufschrumpfen des Schlauchmaterials 5 auf den Anschlußstutzen 1 hat den weiteren Vorteil, daß sich die Innenkontur des Schlauches eng an die Außenkontur des Anschlußstutzens 1 anpaßt, da diese Konturen aus fertigungstechnischen Gründen, insbesondere bei Herstellung im Spritzgußverfahren auch des Anschlußstutzens, und wegen unvermeidlicher Toleranzen nicht stets genau drehsymmetrisch (kreiszylindrisch) sind, sondern mitunter erheblich von der Drehsymmetrie abweichen, ggf. sogar einen leicht ovalen Radialquerschnitt aufweisen. In diesem Zusammenhang ist die Verdrehsicherung des Schlauches 5 durch die Zähne 8 besonders wichtig, da eine Verdrehung des Schlauches 5 nach dem Aufschrumpfen, nachdem also der Schlauch 5 durch das Erstarren auf dem Anschlußstutzen 1 dessen Kontur angenommen hat, zu einer ungleichmäßigen Druckverteilung über den Umfang des Anschlußstutzens 1 (bzw. des Abschnitts 4) führen würde. Die Zähne 8 tragen darüber hinaus, wie die Halterippen 6, 7 und 19, zur Axialsicherung des Schlauches 5 auf dem Anschlußstutzen 4 bei, insbesondere gegen Fluiddruckstöße.

Der über das Aufschubende 9 vorstehende Endabschnitt 16 der Überwurfmutter 2 sorgt für eine radiale Abstützung des Schlauches 5 im Bereich dieses ringförmigen Endabschnitts 16 gegen ein Verbiegen, falls der Schlauch 5 auf Biegung beansprucht wird. Auf diese Weise wird ein Ausheben des Schlauches 5 aus dem Eingriff zwischen den Halterippen 6, 7 und die dadurch bedingte Gefahr eines Herausgleitens des Schlauches aus der Schlauchkupplung vermieden. Desgleichen wird durch diese Schlauchabstützung ein Abbrechen eines Teils oder des gesamten Stutzen-Abschnitts 4 bei einer Verbiegung des Schlauches 5 verhindert.

**Patentansprüche**

1. Schlauchkupplung für einen Schlauch aus thermoplastischem Material, mit einem Anschlußstutzen, auf den der Schlauch aufgeschoben wird, und mit einer der Schlauch umgebenden Klemme zum Festklemmen des auf den Anschlußstutzen aufgeschobenen Schlauches auf dem Anschlußstutzen, wobei der Anschlußstutzen auf seiner Außenseite ringförmig umlaufende Halterippen aufweist, die jeweils eine radiale und eine geneigte Flanke aufweisen, und wobei die Steigungen der geneigten Flanken wenigstens zweier Halterippen einander entgegengesetzt sind, dadurch gekennzeichnet, daß der Anschlußstutzen (1) über seinen Umfang verteilt angeordnete freistehende Zähne (8) aufweist, die radial vorspringen und sich in das Schlauchmaterial auf der Innenseite des Schlauches (5) eindrücken, daß die Zähne (8) eine zum Aufschubende des Anschlußstutzens (1) hin abfallende und eine dem Aufschubende (9) des Anschlußstutzens (1) abgekehrte Flanke (8b) mit einer eine Axialsicherung des Schlauches bewirkenden Flankensteilheit aufweisen, daß die Form der Zähne (8) im Querschnitt etwa dreieckförmig ist und daß die Schneide der Zähne radial zu äußerst liegt.

2. Schlauchkupplung nach Anspruch 1, dadurch gekennzeichnet, daß der Schlauch (5) auf den Anschlußstutzen (1) aufgeschrumpft ist.

3. Schlauchkupplung nach Anspruch 1 oder 2, dadurch gekennzeichnet, daß die Klemme (2) auf der Innenseite mit ringförmig umlaufenden Halterippen (19) versehen ist.

4. Schlauchkupplung nach Anspruch 3, dadurch gekennzeichnet, daß die Klemme (2) eine Überwurfmutter ist und daß ihr Innendurchmesser und der Außendurchmesser des Anschlußstutzens (1) zum Aufschubende (9) des Stutzens hin in gleichem Maße abnehmen.

5. Schlauchkupplung nach Anspruch 3 oder 4, dadurch gekennzeichnet, daß die Halterippen (19) der Klemme (2) achsparallele und radiale Flanken (19a, 19b) aufweisen, wobei die radialen Flanken (19b) vom Aufschubende (9) des Stutzens (1) abgekehrt sind.

6. Schlauchkupplung nach einem der Ansprüche 1 bis 5, dadurch gekennzeichnet, daß die dem Aufschubende (9) des Anschlußstutzens (1) abgekehrten Zahnflanken (8b) radial verlaufen.

7. Schlauchkupplung nach einem der Ansprüche 1 bis 6, dadurch gekennzeichnet, daß die Klemme (2) einen über das Aufschubende (9) des Anschlußstutzens (1) vorstehenden Ringabschnitt (16) aufweist.

8. Schlauchkupplung nach einem der Ansprüche 1 bis 7, dadurch gekennzeichnet, daß auf der dem Aufschubende des Anschlußstutzens (1) abgekehrten Seite der Zähne (8) ein Abschnitt (11) mit reduziertem Durchmesser folgt.

**Claims**

1. A hose coupling for a hose of thermoplastic material, comprising a connecting portion on to which to hose is pushed, and a clamp which surrounds the hose for clamping the hose which is pushed on to the connecting portion firmly on the connecting portion, wherein on its outside the connecting portion has holding ribs which extend annularly therearound and which each have a radial and an inclined flank, and wherein the slopes of the inclined flanks of at least two holding ribs are in opposite relationship to each other, characterised in that the connecting portion (1) has free-standing teeth (8) which are disposed in a distributed arrangement around its periphery and which project radially and which impress themselves into the hose material on the inside of the hose (5), that the teeth (8) have a flank which falls away towards the end (9) of the connecting portion (1) at which the hose is pushed thereon, and a flank (8b) which faces away from said end (9) of the connecting portion (1), with a steepness of flank that provides for axially securing the hose, that the shape of the teeth (8) is approximately triangular in cross-section, and that the cutting edge of the teeth is disposed radially outermost.

2. A hose coupling according to claim 1 characterised in that the hose (5) is a shrink fit on to the connecting portion (1).

3. A hose coupling according to claim 1 or claim 2 characterised in that the clamp (2) is provided on the inside with holding ribs (19) extending annularly therearound.

4. A hose coupling according to claim 3 characterised in that the clamp (2) is a cap nut and that its inside diameter and the outside diameter of the connecting portion (1) decrease to the same degree towards the end (9) of the connecting portion at which the hose is pushed on.

5. A hose coupling according to claim 3 or claim 4 characterised in that the holding ribs (19) of the clamp (2) have flanks (19a, 19b) which are radial and parallel to the axis wherein the radial flanks (19b) face away from the end (9) of the connecting portion (1) at which the hose is pushed on.

6. A hose coupling according to one of claims 1 to 5 characterised in that the flanks (8b) of the teeth, which face away from the end (9) of the connecting portion (1) at which the hose is pushed on, extend radially.

7. A hose coupling according to one of claims 1 to 6 characterised in that the clamp (2) has an annular portion (16) which projects beyond the end (9) of the connecting portion (1) at which the hose is pushed on.

8. A hose coupling according to one of claims 1 to 7 characterised in that a portion (11) of reduced diameter follows on the side of the teeth which faces away from the end of the connecting portion (1) at which the hose is pushed on.

**Revendications**

1. Accouplement pour tuyaux flexibles, destiné à un tuyau flexible en un matériau thermoplastique, et présentant un raccord tubulaire sur lequel le tuyau flexible est enfilé, ainsi qu'un organe de serrage entourant le tuyau flexible pour coincer rigidement, sur le raccord tubulaire, le tuyau flexible enfilé sur ce raccord tubulaire, ledit raccord tubulaire comportant à sa face externe des nervures de retenue s'étendant annulairement à la périphérie et munies à chaque fois d'un flanc radial et d'un flanc incliné, les inclinaisons des flancs obliques d'au moins deux nervures de retenue étant mutuellement opposées, caractérisé par le fait que le raccord tubulaire (1) possède des dents (8) qui dépassent librement, sont réparties sur son pourtour, font saillie radialement et s'enfoncent par pression dans le matériau du tuyau flexible à la face interne de ce tuyau flexible (5) ; par le fait que les dents (8) présentent un flanc déclinant vers l'extrémité d'enfoncement du raccord tubulaire (1), et un flanc (8b) qui est tourné à l'opposé de l'extrémité d'enfoncement (9) du raccord tubulaire (1) et dont l'obliquité provoque un blocage axial du tuyau flexible ; par le fait que la forme de la section des dents (8) est sensiblement triangulaire ; et par le fait que la pointe des dents est située le plus extérieurement dans le sens radial.

2. Accouplement pour tuyaux flexibles selon la revendication 1, caractérisé par le fait que le tuyau flexible (5) est emmanché à chaud sur le raccord tubulaire (1).

3. Accouplement pour tuyaux flexibles selon la revendication 1 ou 2, caractérisé par le fait que l'organe de serrage (2) est muni, sur sa face interne, de nervures de retenue (19) s'étendant annulairement à la périphérie.

4. Accouplement pour tuyaux flexibles selon la revendication 3, caractérisé par le fait que l'organe de serrage (2) consiste en un capuchon taraudé ; et par le fait que son diamètre interne et le diamètre externe du raccord tubulaire (1) décroissent d'une même valeur en direction de l'extrémité d'enfoncement (9) dudit raccord.

5. Accouplement pour tuyaux flexibles selon la revendication 3 ou 4, caractérisé par le fait que les nervures de retenue (19) de l'organe de serrage (2) comportent des flancs parallèles à l'axe et des flancs radiaux (19a, 19b), les flancs radiaux (19b) étant tournés à l'opposé de l'extrémité d'enfoncement (9) du raccord tubulaire (1).

6. Accouplement pour tuyaux flexibles selon l'une des revendications 1 à 5, caractérisé par le fait que les flancs (8b) des dents tournés à l'opposé de l'extrémité d'enfoncement (9) du raccord tubulaire (1) s'étendent radialement.

7. Accouplement pour tuyaux flexibles selon l'une des revendications 1 à 6, caractérisé par le fait que l'organe de serrage (2) présente une région annulaire (16) faisant saillie au-delà de l'extrémité d'enfoncement (9) du raccord tubulaire (1).

8. Accouplement pour tuyaux flexibles selon l'une des revendications 1 à 7, caractérisé par le fait qu'une région (11), de diamètre réduit, est attenante au côté des dents (8) tourné à l'opposé de l'extrémité d'enfoncement du raccord tubulaire (1).

Fig.1

Fig.2

Fig.3